# FASCICULE DE BREVET EUROPEEN

(11) **EP 3 289 691 B1**
(45) Date de publication et mention de la délivrance du brevet: **25.03.2020**
(21) Numéro de dépôt: 16723418.6
(22) Date de dépôt: 15.04.2016
(51) Int. Cl.: H04B 3/54, H02J 1/06, H02J 7/00, H02J 13/00

(54) **PROCÉDÉ D'ÉCHANGE DE DONNÉES ENTRE DEUX DISPOSITIFS ÉLECTROMÉCANIQUES**
VERFAHREN ZUM AUSTAUSCH VON DATEN ZWISCHEN ZWEI ELEKTROMECHANISCHEN VORRICHTUNGEN
METHOD OF EXCHANGING DATA BETWEEN TWO ELECTROMECHANICAL DEVICES

(30) Priorité: 29.04.2015 FR 1553877
(43) Date de publication de la demande: 07.03.2018
(73) Titulaire: Commissariat à l'énergie atomique et aux énergies alternatives, 75015 Paris (FR); BUBENDORFF Société Anonyme, 68220 Attenschwiller (FR)
(72) Inventeur: DESPESSE, Ghislain, 38340 Voreppe (FR); VIAL, Franck, 38850 Paladru (FR); GRISEL, Antoine, 38000 Grenoble (FR)
(74) Mandataire: Cabinet Beaumont
(86) Numéro de dépôt international: PCT/FR2016/050894
(87) Numéro de publication internationale: WO 2016/174327

(56) Documents cités:
- EP-A2- 1 928 070
- US-A1- 2009 108 828
- US-A1- 2012 133 310

## Description

### Domaine

La présente demande concerne un procédé d'échange de données entre deux dispositifs électromécaniques et un système électromécanique comprenant deux dispositifs électromécaniques mettant en œuvre un tel procédé d'échange de données.

### Exposé de l'art antérieur

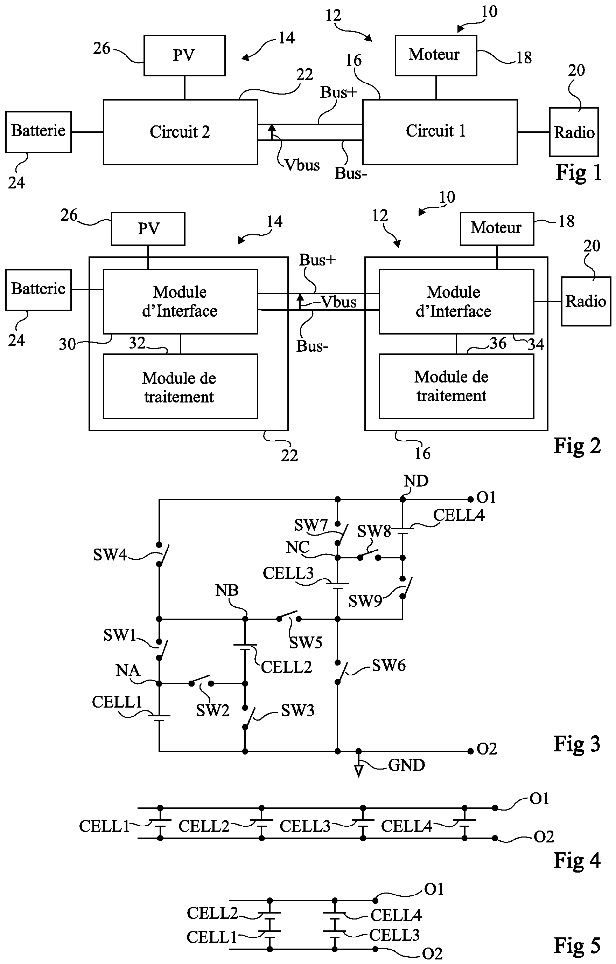

La figure 1 représente, de façon partielle et schématique, un système électromécanique 10 comprenant un premier dispositif électromécanique 12 et un deuxième dispositif électromécanique 14. Le premier dispositif électromécanique 12 comprend notamment un premier circuit électronique 16 relié à des équipements électromécaniques 18, 20. Le deuxième dispositif électromécanique 30 comprend notamment un deuxième circuit électronique 22 relié à des équipements électromécaniques 24, 26.

A titre d'exemple, le système électromécanique 10 est un système d'actionnement d'un volet roulant, non représenté. Le premier dispositif électromécanique 12 peut comprendre l'ensemble des éléments nécessaires à la commande et l'entrainement du volet roulant. A titre d'exemple, les équipements électromécaniques 18, 20 peuvent comprendre un moteur 18 d'entraînement du volet roulant et un module de télécommunications 20 adapté, par exemple, à recevoir des signaux de commande fournis par une télécommande. Le deuxième dispositif électromécanique 14 peut correspondre à un dispositif d'alimentation autonome du premier dispositif électromécanique 12. A titre d'exemple, les équipements électromécaniques 24, 26 peuvent comprendre une batterie d'accumulateurs 24 et un générateur 26 adapté à fournir de l'électricité à partir d'une énergie d'origine renouvelable, par exemple des panneaux photovoltaïques, une éolienne, une turbine hydraulique ou un générateur thermoélectrique. En second exemple, les équipements électromécaniques 24, 26 peuvent comprendre un ou plusieurs convertisseurs aptes à prélever de l'énergie sur le réseau électrique et à la fournir au premier dispositif électromécanique 12.

Le circuit électronique 16 est relié au circuit électronique 22 par des liaisons filaires, notamment par l'intermédiaire de deux fils ou lignes Bus+ et Bus-. Le circuit électronique 22 fournit une tension continue Vbus, de préférence une tension sensiblement constante, entre les fils Bus+ et Bus- à partir de laquelle sont alimentés le circuit électronique 16 et les équipements électromécaniques 18, 20. Un exemple est le document US 2009/0108828.

Le fait que les dispositifs électromécaniques 12, 14 soient reliés entre eux par des liaisons filaires permet de disposer les dispositifs 12 et 14 à des emplacements différents. En outre, ceci permet de modifier facilement l'un des dispositifs électromécaniques 14 sans modifier l'autre dispositif électromécanique 12. A titre d'exemple, dans le cas d'un système 10 d'actionnement d'un volet roulant, il peut être souhaitable de pouvoir remplacer le dispositif 14 d'alimentation autonome du dispositif 12 d'actionnement du volet roulant par un convertisseur alternatif/continu relié au secteur.

Il est souhaitable que le dispositif 12 d'actionnement du volet roulant puisse transmettre des signaux de commande au dispositif d'alimentation 14. A titre d'exemple, le dispositif 12 peut demander au dispositif d'alimentation 14 de diminuer la tension Vbus lorsque le moteur 18 n'est pas utilisé de façon à réduire la consommation électrique du système électromécanique 10.

Il est, en outre, souhaitable que le dispositif d'alimentation 14 puisse également transmettre des données au dispositif 12 d'actionnement du volet roulant. A titre d'exemple, le circuit électronique 22 peut transmettre au circuit électronique 16 des données représentatives de l'état de charge de la batterie 24 ou de l'état de fonctionnement des panneaux photovoltaïques 26 de façon que le circuit électronique 16 adapte la commande du moteur 18 en conséquence.

Toutefois, le nombre de fils reliant les circuits électroniques 16 et 22 doit rester le plus faible possible, de préférence égal à deux pour faciliter l'installation du dispositif électromécanique 12.

### Résumé

L' objet de la présente invention est de pallier tout ou partie des systèmes électromécaniques comprenant un premier dispositif électromécanique relié à un deuxième dispositif électromécanique par des liaisons filaires décrits précédemment.

Le mode de réalisation est de permettre une transmission bidirectionnelle de données entre les premier et deuxième dispositifs électromécaniques, le premier dispositif électromécanique étant, en outre, alimenté par le deuxième dispositif électromécanique.

Le mode de réalisation est de réaliser la transmission bidirectionnelle de données entre les premier et deuxième dispositifs électromécaniques avec les fils utilisés pour l'alimentation du premier dispositif électromécanique par le deuxième dispositif électromécanique.

Le mode de réalisation est que l'échange de données entre les premier et deuxième dispositifs électromécaniques est robuste par rapport aux perturbations électromagnétiques.

Ainsi, le mode de réalisation prévoit un système électromécanique comprenant au moins des premier et deuxième dispositifs électromécaniques et au moins deux fils reliant les premier et deuxième dispositifs électromécaniques, le deuxième dispositif électromécanique étant adapté à fournir entre les fils une tension d'alimentation du premier dispositif électromécanique à une valeur de tension constante parmi au moins deux valeurs de tension constante, et étant adapté à transmettre des premières données numériques au premier dispositif électromécanique par modulation de ladite tension d'alimentation entre lesdites au moins deux valeurs de tension constante, le premier dispositif électromécanique étant, en outre, adapté à transmettre des deuxièmes données numériques au deuxième dispositif électromécanique par lesdits au moins deux fils.

Selon un mode de réalisation, le premier dispositif électromécanique est adapté à transmettre les deuxièmes données numériques au deuxième dispositif électromécanique par modulation de ladite tension d'alimentation.

Selon un mode de réalisation, le premier dispositif électromécanique comprend au moins des premier et deuxième condensateurs et un circuit de commutation adapté à connecter le premier condensateur en série avec le deuxième condensateur entre les deux fils ou à connecter le premier condensateur entre les deux fils.

Selon un mode de réalisation, le deuxième dispositif électromécanique comprend une diode dont la cathode est reliée à l'un des fils.

Selon un mode de réalisation, le deuxième dispositif électromécanique comprend une batterie d'accumulateurs et un circuit électronique relié à la batterie d'accumulateurs.

Selon un mode de réalisation, le deuxième dispositif électromécanique comprend un générateur d'électricité à partir d'une énergie d'origine renouvelable relié à la batterie d'accumulateurs.

Selon un mode de réalisation, le premier dispositif électromécanique comprend un moteur électrique alimenté par ladite tension d'alimentation.

Selon un mode de réalisation, le circuit électronique est adapté à fournir ladite tension d'alimentation à une valeur de tension constante parmi au moins des première, deuxième et troisième valeurs de tension constante strictement croissantes, le circuit électronique est adapté à fournir ladite tension d'alimentation à la troisième valeur lorsque le moteur est en fonctionnement et le circuit électronique est adapté à transmettre les premières données numériques au premier dispositif électromécanique par modulation de ladite tension d'alimentation entre la première valeur et la deuxième valeur.

Selon un mode de réalisation, le premier dispositif est relié au deuxième dispositif seulement par deux fils.

Selon un mode de réalisation, le système comprend au moins deux premiers dispositifs reliés auxdits au moins deux fils.

Un mode de réalisation prévoit également un procédé de communication d'un système électromécanique comprenant au moins des premier et deuxième dispositifs électromécaniques et au moins deux fils reliant les premier et deuxième dispositifs électromécaniques, le deuxième dispositif électromécanique comprenant une batterie d'accumulateurs et un circuit électronique relié à la batterie d'accumulateurs, dans lequel le circuit électronique fournit entre les fils une tension d'alimentation du premier dispositif électromécanique à une valeur de tension constante parmi au moins deux valeurs de tension constante, et transmet des premières données numériques au premier dispositif électromécanique par modulation de ladite tension d'alimentation entre lesdites au moins deux valeurs de tension constante et dans lequel le premier dispositif électromécanique transmet des deuxièmes données numériques au deuxième dispositif électromécanique par lesdits au moins deux fils.

Selon un mode de réalisation, le premier dispositif électromécanique transmet les deuxièmes données numériques au deuxième dispositif électromécanique par modulation de ladite tension d'alimentation.

Selon un mode de réalisation, le système électromécanique comprend au moins deux premiers dispositifs reliés auxdits au moins deux fils et les deux premiers dispositifs sont adaptés à échanger des troisièmes données numériques entre eux par l'intermédiaire des deux fils.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente de façon partielle et schématique un exemple d'un système électromécanique comprenant deux dispositifs électromécaniques ;
la figure 2 représente, de façon partielle et schématique, un mode de réalisation d'un système électromécanique comprenant des premier et deuxième dispositifs électromécaniques et permettant la transmission bidirectionnelle de données entre les dispositifs ;
la figure 3 représente, de façon partielle et schématique, un mode de réalisation d'une batterie d'accumulateurs ;
les figures 4 à 7 représentent des schémas électriques équivalents de la batterie représentée en figure 3 dans quatre configurations de fonctionnement ;
la figure 8 représente un schéma électrique d'un mode de réalisation d'une partie du deuxième dispositif électromécanique du système électromécanique de la figure 2 ;
la figure 9 représente un schéma électrique d'un mode de réalisation d'une partie du premier dispositif électromécanique du système électromécanique de la figure 2 ;
la figure 10 est un chronogramme de signaux du système électromécanique de la figure 2 lors de la transmission de données du deuxième dispositif électromécanique vers le premier dispositif électromécanique ;
la figure 11 représente un mode de réalisation plus détaillé d'éléments du système électromécanique de la figure 2 permettant la transmission de données du premier dispositif électromécanique vers le deuxième dispositif électromécanique ;
la figure 12 représente un mode de réalisation plus détaillé du système électromécanique de la figure 11 ;
la figure 13 est un chronogramme de signaux du système électromécanique de la figure 11 lors de la transmission de données du premier dispositif électromécanique vers le deuxième dispositif électromécanique ;
la figure 14 représente une variante du mode de réalisation du système électromécanique de la figure 11 ; et
la figure 15 représente, de façon partielle et schématique, un autre mode de réalisation d'un système électromécanique.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, la structure et le fonctionnement d'un microcontrôleur sont bien connus d'un homme du métier et ne sont pas décrits en détail. Sauf précision contraire, les expressions "approximativement", "sensiblement", et "de l'ordre de" signifient à 10 % près, de préférence à 5 % près. De plus, on appelle "signal binaire" un signal qui alterne entre un premier état constant, par exemple un état bas, noté "0", et un deuxième état constant, par exemple un état haut, noté "1". Les états haut et bas de signaux binaires d'un même circuit électronique peuvent être différents. En pratique, les signaux binaires peuvent correspondre à des tensions ou à des courants qui peuvent ne pas être parfaitement constants à l'état haut ou bas. Par ailleurs, dans la présente description, on utilise le terme "connecté" pour désigner une liaison électrique directe, sans composant électronique intermédiaire, par exemple au moyen d'une piste conductrice, et le terme "couplé" ou le terme "relié", pour désigner soit une liaison électrique directe (signifiant alors "connecté") soit une liaison via un ou plusieurs composants intermédiaires (résistance, condensateur, etc.).

Un mode de réalisation vise un procédé de transmission de données bidirectionnelles entre un premier dispositif électromécanique et un deuxième dispositif électromécanique d'un système électromécanique. Le deuxième dispositif électromécanique est adapté à alimenter le premier dispositif électromécanique avec une tension d'alimentation constante qui peut prendre une valeur parmi plusieurs valeurs de tension constante. Le deuxième dispositif électromécanique est, en outre, adapté à transmettre des données au premier dispositif électromécanique par une modulation en amplitude de la tension d'alimentation fournie par le deuxième dispositif électromécanique au premier dispositif électromécanique en utilisant les différentes valeurs de tension constante. Le premier dispositif électromécanique est, en outre, adapté à transmettre des données au deuxième dispositif électromécanique par un procédé de modulation qui peut être un procédé de modulation en tension ou en courant. De façon avantageuse, le procédé de transmission de données du premier dispositif électromécanique au deuxième dispositif électromécanique est un procédé de modulation en tension de la tension d'alimentation.

Des modes de réalisation vont être décrits pour un système électromécanique utilisé pour l'entraînement d'un volet roulant. Toutefois, ces modes de réalisation peuvent être mis en œuvre pour d'autres applications, par exemple un système d'actionnement d'un portail, d'une porte de garage, d'une barrière de parking, un parcmètre, ou un système de mesure ou de détection autonome en énergie comprenant un ou plusieurs capteurs, par exemple un système d'alarme ou un système de surveillance de structures.

Le circuit électronique 22 est adapté à réaliser plusieurs fonctions dont les principales sont les suivantes :
fournir une tension continue VCC2, de préférence sensiblement constante, pour l'alimentation des composants du circuit électronique 22 ;
fournir une tension continue Vbus entre les fils Bus+ et Bus-, dont l'amplitude peut prendre au moins deux valeurs de tension constante, de préférence N valeurs de tension constante Vbusᵢ, N étant un nombre entier variant de 2 à 10 et i étant un nombre entier variant de 1 à N, la valeur Vbus₁, non nulle, étant, à titre d'exemple, la plus faible et la valeur Vbus_{N} étant la plus élevée ;
commander la charge de la batterie par les panneaux photovoltaïques 26 ;
faire varier la tension Vbus selon les valeurs de tension constante Vbusᵢ de façon à obtenir une modulation de la tension Vbus pour la transmission de données vers le circuit électronique 16 ; et
recevoir des données transmises par le circuit électronique 16 sur le fil Bus+ et/ou le fil Bus-, transmise, par exemple, par une modulation de la tension Vbus.

Selon un mode de réalisation, les valeurs de tension constante Vbusᵢ sont positives.

Le circuit électronique 22 peut, en outre, être adapté à réaliser les fonctions secondaires suivantes :
déterminer le taux de charge de la batterie ;
déterminer le bon état de fonctionnement des accumulateurs de la batterie 24 et des panneaux photovoltaïques 26 en reliant le circuit d'interface 30 à un ou plusieurs capteurs, par exemple, des capteurs de température disposés à proximité des accumulateurs de la batterie 24 ; et
éventuellement, prévoir la variation du taux de charge de la batterie 24.

Le circuit électronique 16 est adapté à réaliser plusieurs fonctions dont les principales sont les suivantes :
fournir au moins une tension d'alimentation VCC1 à partir de la tension Vbus pour l'alimentation des composants du circuit électronique 16 ;
commander le moteur 18 en fonction de commandes reçues par le module radio 20 ;
transmettre des données au circuit électronique 22 sur le fil Bus+ et/ou le fil Bus- ; et
recevoir des données transmises par le circuit électronique 22 sur le fil Bus+ et/ou le fil Bus-.

La figure 2 représente un mode de réalisation du système électromécanique 10 dans lequel des éléments participant à la transmission de données du circuit électronique 22 vers le circuit électronique 16 sont représentés plus en détails. Dans les modes de réalisation décrits par la suite, le fil Bus- est relié à une source d'un potentiel de référence bas, par exemple la masse GND. Une modulation de la tension Vbus correspond alors à une simple modulation du potentiel sur le fil Bus+ si on considère le potentiel sur le fil Bus- comme la référence de potentiel.

Dans le présent mode de réalisation, le circuit électronique 22 comprend un module d'interface 30 relié à la batterie 24, aux panneaux photovoltaïques 26 et aux fils Bus+ et Bus- et un module de traitement 32 relié au module d'interface 30. De plus, le circuit électronique 16 comprend un module d'interface 34 relié au moteur 18, au module radio 20 et aux fils Bus+ et Bus- et un module de traitement 36 relié au module d'interface 34. Chaque circuit électronique 16, 22 peut être réalisé au moins en partie par au moins un circuit dédié et/ou un circuit intégré permettant l'exécution d'instructions stockées dans une mémoire, par exemple un microprocesseur, un microcontrôleur, un circuit intégré prédiffusé programmable ou FPGA (acronyme anglais pour Field Programmable Gate Array), un circuit intégré propre à une application ou ASIC (acronyme anglais pour Application-Specific Integrated Circuit) ou un processeur de signal numérique ou DSP (acronyme anglais pour Digital Signal Processor). A titre d'exemple, chaque module d'interface 30, 34 peut comprendre un circuit électronique dédié et chaque module de traitement 32, 36 peut comprendre un circuit intégré permettant l'exécution d'instructions stockées dans une mémoire, par exemple un microprocesseur, un microcontrôleur, un FPGA, un ASIC ou un DSP.

La figure 3 représente, de façon partielle et schématique, un mode de réalisation de la batterie 24 et d'une partie du module d'interface 30. La batterie 24 comprend quatre accumulateurs CELL1, CELL2, CELL3 et CELL4 étant représentés à titre d'exemple en figure 3. La tension nominale que peut fournir chaque accumulateur dépend de la technologie utilisée pour la fabrication de l'accumulateur. A titre d'exemple, un accumulateur selon la technologie NiMH est adaptée à fournir une tension nominale de l'ordre de 1,2 V et un accumulateur selon la technologie Li-ion est adapté à fournir une tension nominale de l'ordre de 3,6 V.

Les accumulateurs CELL1 à CELL4 sont reliés entre eux et à des noeuds O1 et O2 par des interrupteurs commandables SW1 à SW9. Selon un mode de réalisation, l'accumulateur CELL1 a une borne positive reliée à un noeud NA et une borne négative reliée au noeud O2. La borne positive de l'accumulateur CELL2 est reliée à un noeud NB. La borne positive de l'accumulateur CELL3 est reliée à un noeud NC. La borne positive de l'accumulateur CELL4 est reliée à un noeud ND. Le noeud NA est relié au noeud NB par un interrupteur SW1. Le noeud NA est relié à la borne négative de l'accumulateur CELL2 par un interrupteur SW2 et la borne négative de l'accumulateur CELL2 est reliée au noeud O2 par un interrupteur SW3. Le noeud NB est relié au noeud ND par un interrupteur SW4. Le noeud NB est relié à la borne négative de l'accumulateur CELL3 par un interrupteur SW5. La borne négative de l'accumulateur CELL3 est reliée au noeud O2 par un accumulateur SW6. Le noeud NC est relié au noeud ND par un interrupteur SW7. Le noeud NC est relié à la borne négative de l'accumulateur CELL4 par un interrupteur SW8. La borne négative de l'accumulateur CELL3 est reliée à la borne négative de l'accumulateur CELL4 par un interrupteur SW9. Le noeud O1 peut être relié au fil Bus+ et le noeud O2 peut être relié au fil Bus-. La tension Vbus correspond alors sensiblement à la tension entre les noeuds O1 et O2. En fonctionnement, le noeud O2 peut être relié à la masse GND.

Les signaux de commande des interrupteurs SW1 à SW9 sont obtenus à partir de signaux binaires fournis par le module de traitement 32. Le module de traitement 32 est adapté à commander les interrupteurs SW1 à SW9, notamment lors d'une opération de charge de la batterie 24 par les panneaux photovoltaïques 26 et pour la fourniture de la tension Vbus aux différentes valeurs de tension constante Vbusᵢ.

Les figures 4 à 7 représentent des schémas électriques équivalents du circuit représenté en figure 3 pour quatre configurations de fermeture et d'ouverture des interrupteurs SW1 à SW9.

En figure 4, les interrupteurs SW2, SW5, SW8 sont ouverts et les interrupteurs SW1, SW3, SW4, SW6, SW7 et SW9 sont fermés. Les accumulateurs CELL1 à CELL4 sont alors montés en parallèle. Cette configuration peut être utilisée pour la charge des accumulateurs par les panneaux photovoltaïques 26 de façon à obtenir une charge équilibrée des accumulateurs CELL1 à CELL4. La valeur de tension constante Vbus₁ obtenue entre les noeuds O1 et O2 est alors égale à la tension nominale d'un seul accumulateur, par exemple de l'ordre de 3 V.

La figure 5 représente le schéma électrique obtenu lorsque les interrupteurs SW2, SW4, SW6 et SW8 sont fermés et les interrupteurs SW1, SW3, SW5, SW7 et SW9 sont ouverts. Dans cette configuration, les accumulateurs CELL1 et CELL2 sont en série entre les noeuds O1 et O2 et les accumulateurs CELL3 et CELL4 sont en série entre les noeuds O1 et O2. La valeur de tension constante Vbus₂ obtenue entre les noeuds O1 et O2 est égale à deux fois la tension nominale d'un seul accumulateur, par exemple de l'ordre de 6 V.

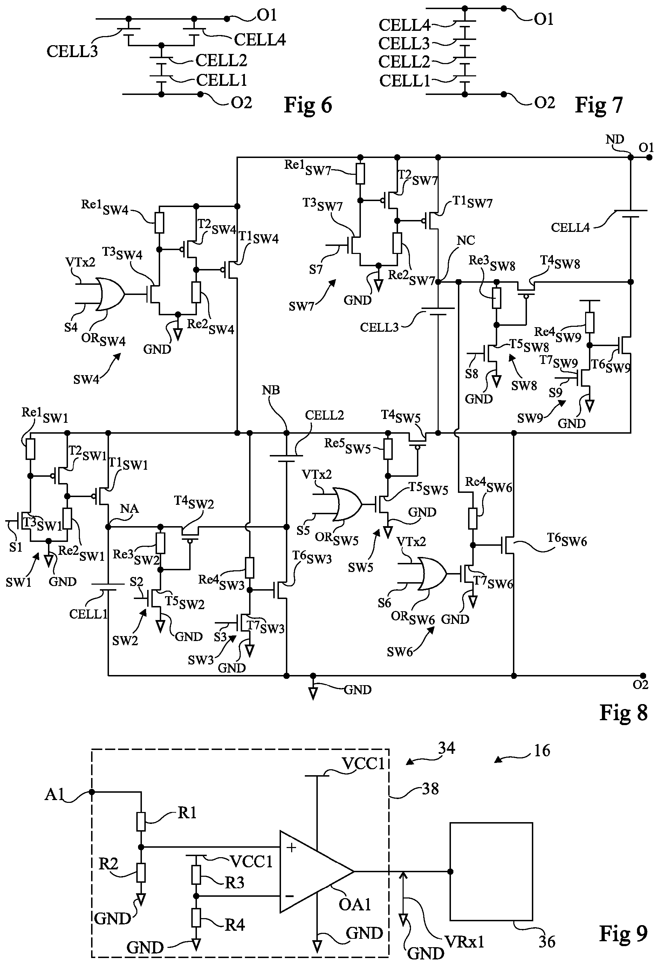

La figure 6 représente le schéma électrique obtenu lorsque les interrupteurs SW2, SW5, SW7 et SW9 sont fermés et les interrupteurs SW1, SW3, SW4, SW6 et SW8 sont ouverts. Dans cette configuration, les accumulateurs CELL3 et CELL4 sont en parallèle et l'ensemble comprenant les accumulateurs CELL3 et CELL4 est en série avec les accumulateurs CELL1 et CELL2 entre les noeuds O1 et O2. La valeur de tension constante Vbus₃ obtenue entre les noeuds O1 et O2 est égale à trois fois la tension nominale d'un seul accumulateur, par exemple de l'ordre de 9 V.

La figure 7 représente le schéma électrique obtenu lorsque les interrupteurs SW2, SW5 et SW8 sont fermés et les interrupteurs SW1, SW3, SW4, SW6, SW7 et SW9 sont ouverts. Dans cette configuration, les accumulateurs CELL1, CELL2, CELL3 et CELL4 sont en série entre les noeuds O1 et O2. La valeur de tension constante Vbus₄ obtenue entre les noeuds O1 et O2 est égale à quatre fois la tension nominale d'un seul accumulateur, par exemple de l'ordre de 12 V.

Selon un mode de réalisation, pour alimenter le dispositif électromécanique 12, le circuit électronique 22 est adapté à fournir la tension Vbus à au moins deux valeurs de tension constante parmi les différentes valeurs de tension constante Vbusᵢ. A titre d'exemple, lorsque le moteur 18 est en fonctionnement, le circuit électronique 22 est commandé pour alimenter le dispositif électromécanique 12 avec la tension Vbus au niveau le plus élevé Vbus_{N}. Lorsque le moteur 18 n'est pas en fonctionnement, et en l'absence d'échange de données entre les dispositifs 12 et 14, le circuit électronique 22 est commandé pour alimenter le dispositif électromécanique 12 avec la tension Vbus à une valeur différente de la valeur la plus élevée, par exemple la valeur la plus basse Vbus₁, ce qui permet avantageusement de limiter la consommation du système électromécanique 10. Le module d'interface 34 est adapté à fournir la tension d'alimentation VCC1 sensiblement constante à partir de la tension Vbus quelle que soit la valeur de la tension Vbus, pour l'alimentation d'éléments qui composent le dispositif électromécanique 12, notamment le module radio 20, le module de traitement 36 et le module d'interface 34. A titre d'exemple, la tension d'alimentation VCC1 peut être sensiblement égale à la valeur Vbus₁. Lorsque le moteur 18 est en fonctionnement, le module d'interface 34 est adapté à fournir une consigne à partir de laquelle le moteur 18 est commandé. A titre d'exemple, la consigne est obtenue par hachage de la tension Vbus égale à Vbus_{N}.

Selon un mode de réalisation, le circuit électronique 22 est adapté à transmettre des données au circuit électronique 16 en faisant varier la tension Vbus entre les fils Bus+ et Bus-entre au moins deux valeurs parmi les valeurs de tension constante Vbusᵢ. Dans ce but, le module de traitement 32 commande le module d'interface 30 pour faire varier la valeur de la tension Vbus. Selon un mode de réalisation, le module de traitement 32 est adapté à fournir une succession de signaux binaires Vtx2 "0" ou "1" et le module d'interface 34 comprend un circuit logique et un circuit d'adaptation de niveau de tension pour la commande des interrupteurs SW1 à SW9.

Selon un mode de réalisation, le module de traitement 32 comprend un microcontrôleur et les signaux binaires VTx2 peuvent être fournis directement par le port série du microcontrôleur qui peut comprendre, pour l'échange de données sur le port série, un circuit périphérique du type UART (acronyme anglais pour Universal Asynchronous Receiver/Transmitter). A titre d'exemple, le signal binaire "0" correspond à la tension VTx2 égale à 0 V et le signal binaire "1" correspond à la tension VTx2 égale à VCC2. Par défaut, le signal binaire VTx2 peut être à "1".

Selon un mode de réalisation, la transmission du signal numérique "0" peut correspondre à l'application entre les fils Bus+ et Bus- d'une première valeur de tension constante, par exemple la valeur de tension constante Vbus₁ et la transmission du signal numérique "1" peut correspondre à l'application entre les fils Bus+ et Bus- d'une deuxième valeur de tension constante, par exemple la valeur de tension constante Vbus₂. La première valeur de tension permet d'alimenter correctement le dispositif électromécanique 12. De préférence, la deuxième valeur de tension est choisie supérieure à la première valeur de tension. Cela permet avantageusement que, lors d'une modulation de la tension du bus par le dispositif électromécanique 14, le dispositif électromécanique 12 reçoive une tension supérieure ou égale à la première valeur de tension, et soit donc correctement alimenté. En outre, la première valeur de tension est de préférence choisie la plus basse possible, par exemple égale à Vbus₁, pour limiter la consommation du système électromécanique 10. De façon avantageuse, l'écart entre les première et deuxième valeurs de tension constante est inférieur à l'écart entre les valeurs de tension constante minimale Vbus₁ et maximale Vbus_{N}, pour réduire la consommation électrique du système 10 lors d'une transmission de données.

La figure 8 représente un mode de réalisation plus détaillé du circuit représenté en figure 3. Dans ce mode de réalisation, trois structures d'interrupteurs différentes sont utilisées pour les interrupteurs SW1 à SW9.

L'interrupteur SW1 comprend un transistor T1_{SW1} à effet de champ à grille métal-oxyde, ou transistor MOS, à canal P, dont la source est reliée au nœud NB et dont le drain est relié au nœud NA. L'interrupteur SW1 comprend, en outre, un transistor MOS T2_{SW1} à canal P dont la source est reliée au nœud NB et dont le drain est relié à la grille du transistor T1_{SW1}. L'interrupteur SW1 comprend, en outre, un transistor MOS T3_{SW1} à canal N dont le drain est relié à la grille du transistor T2_{SW1}, dont la source est reliée à la masse GND et dont la grille reçoit le signal S1. Le drain du transistor T3_{SW1} est relié à la source du transistor T2_{SW1} par une résistance Re1_{SW1} et le drain du transistor T2_{SW1} est reliée à la masse GND par une résistance Re2_{SW1}.

L'interrupteur SW2 comprend un transistor MOS T4_{SW2} à canal P, dont le drain est relié à l'électrode négative de l'accumulateur CELL2 et dont la source est reliée au noeud NA. L'interrupteur SW2 comprend, en outre, un transistor MOS T5_{SW2} à canal N dont le drain est relié à la grille du transistor T4_{SW2} et est relié à la source du transistor T4_{SW2} par une résistance Re3_{SW2}, dont la source est reliée à la masse GND et dont la grille reçoit le signal S2.

L'interrupteur SW3 comprend un transistor MOS T6_{SW3} à canal N, dont le drain est relié à l'électrode négative de l'accumulateur CELL2 et dont la source est reliée à la masse GND. L'interrupteur SW3 comprend, en outre, un transistor MOS T7_{SW3} à canal N dont le drain est relié à la grille du transistor T6_{SW3} et est relié au nœud NB par une résistance Re4_{SW3}, dont la source est reliée à la masse GND et dont la grille reçoit le signal S3.

L'interrupteur SW4 a la même structure que l'interrupteur SW1 à la différence que le nœud NB est remplacé par le nœud ND et que le nœud NA est remplacé par le nœud NB. De plus, l'interrupteur SW4 comprend une porte logique "OU" OR_{SW4} recevant le signal S4 et le signal VTx2 et dont la sortie est reliée à la grille du transistor T3_{SW4}. L'interrupteur SW5 a la même structure que l'interrupteur SW2 à la différence que l'accumulateur CELL2 est remplacé par l'accumulateur CELL3 et que le nœud NA est remplacé par le nœud NB. De plus, l'interrupteur SW5 comprend une porte logique "OU" OR_{SW5} recevant le signal S5 et le signal VTx2 et dont la sortie est reliée à la grille du transistor T5_{SW5}. L'interrupteur SW6 a la même structure que l'interrupteur SW3 à la différence que l'accumulateur CELL2 est remplacé par l'accumulateur CELL3 et que le nœud NB est remplacé par le nœud NC. De plus, l'interrupteur SW6 comprend une porte logique "OU" OR_{SW6} recevant le signal S6 et le signal VTx2 et dont la sortie est reliée à la grille du transistor T7_{SW6}.

L'interrupteur SW7 a la même structure que l'interrupteur SW1 à la différence que le nœud NB est remplacé par le nœud ND et que le nœud NA est remplacé par le nœud NC. L'interrupteur SW8 a la même structure que l'interrupteur SW2 à la différence que l'accumulateur CELL2 est remplacé par l'accumulateur CELL4 et que le nœud NA est remplacé par le nœud NC. L'interrupteur SW9 a la même structure que l'interrupteur SW3 à la différence que l'accumulateur CELL2 est remplacé par l'accumulateur CELL4, que le nœud NB est remplacé par le nœud ND et que la masse GND reliée au transistor T6_{SW3} est remplacée par l'électrode négative de l'accumulateur CELL3 pour le transistor T6_{SW9}.

Pour l'alimentation du dispositif électromécanique 12, dont la commande du moteur 18, et pour la charge des accumulateurs de la batterie 24, le signal VTx2 est maintenu à "0" lorsqu'il n'y a pas d'échanges de signaux entre les circuits électroniques 16 et 22 et les signaux binaires S1 à S9 sont fournis par le module de traitement 32 pour mettre la tension Vbus à la valeur de tension constante Vbus₁ à Vbus₄ souhaitée. Selon un mode de réalisation, pour la charge des accumulateurs de la batterie 24, les accumulateurs sont disposés en parallèle comme cela est représenté en figure 4, et lorsque les accumulateurs de la batterie 24 ne sont pas connectés entre eux en parallèle, une charge de la batterie 24 n'est pas autorisée. Les structures des interrupteurs SW1 à SW9, notamment les valeurs et positions des résistances de rappel, sont choisies pour obtenir le schéma électrique représenté en figure 4 lorsque les signaux S1 à S9 sont à "0".

Pour la transmission de données au dispositif électromécanique 12, les signaux S1 à S9 sont maintenus à "0" et le signal binaire VTx2 est fourni par le module de traitement 32 pour faire alterner la tension Vbus entre Vbus₁ et Vbus₂ selon les données à transmettre au dispositif électromécanique 12.

Les valeurs des résistances de rappel Re₁SW₁, Re₁SW₂, Re₃SW₂, etc., des interrupteurs SW1 à SW9 sont choisies pour parvenir à un compromis entre la vitesse de commutation et la consommation électrique de l'interrupteur.

Le module de traitement 36 est adapté à déterminer les signaux binaires émis par le circuit électronique 22 à partir des variations de la tension Vbus entre les fils Bus+ et Bus-.

La figure 9 représente un mode de réalisation d'une partie du circuit d'interface 34 du circuit électronique 12. Selon un mode de réalisation, le circuit d'interface 34 comprend un circuit d'adaptation 38 interposé entre le fil Bus+ et le module de traitement 36. Le circuit d'adaptation 38 permet de transformer la tension Vbus présente sur le fil Bus+ en une tension Rx1 variant dans une plage adaptée au module de traitement 36. Dans le cas où le module de traitement 36 comprend un microcontrôleur, le niveau de la tension VRx1 est tel que la tension VRx1 peut être transmise directement au port série du microcontrôleur. A titre d'exemple, le signal binaire "0" correspond à la tension VRx1 à 0 V et le signal binaire "1" correspond à la tension VRx1 à VCC1, la tension d'alimentation VCC1 pouvant, selon un mode de réalisation, être inférieure ou égale à Vbus₁.

A titre d'exemple, le circuit d'adaptation 38 comprend un nœud d'entrée A1 relié au fil Bus+. Le circuit d'adaptation 38 comprend, en outre, un amplificateur opérationnel OA1 dont l'entrée non inverseuse (+) est reliée au nœud A1 par une résistance R1 et est reliée à la masse GND par une résistance R2. L'entrée inverseuse (-) de l'amplificateur opérationnel OA1 est reliée à une ligne recevant la tension d'alimentation VCC1 fournie par le circuit d'interface 34, par une résistance R3, et est reliée à la masse GND par une résistance R4. La sortie de l'amplificateur opérationnel OA1 peut être reliée à une borne du module de traitement 36. Lorsque le module de traitement 36 est un microcontrôleur, la sortie de l'amplificateur opérationnel OA1 peut être reliée au port série du microcontrôleur. L'amplificateur opérationnel OA1 est alimenté par la tension d'alimentation VCC1. A titre d'exemple, pour la transmission de données, la tension Vbus peut alterner entre Vbus₁, par exemple à environ 3 V, et Vbus₂, par exemple à environ 6 V, et la tension VRx1 peut alterner entre environ 0 V et environ 3 V.

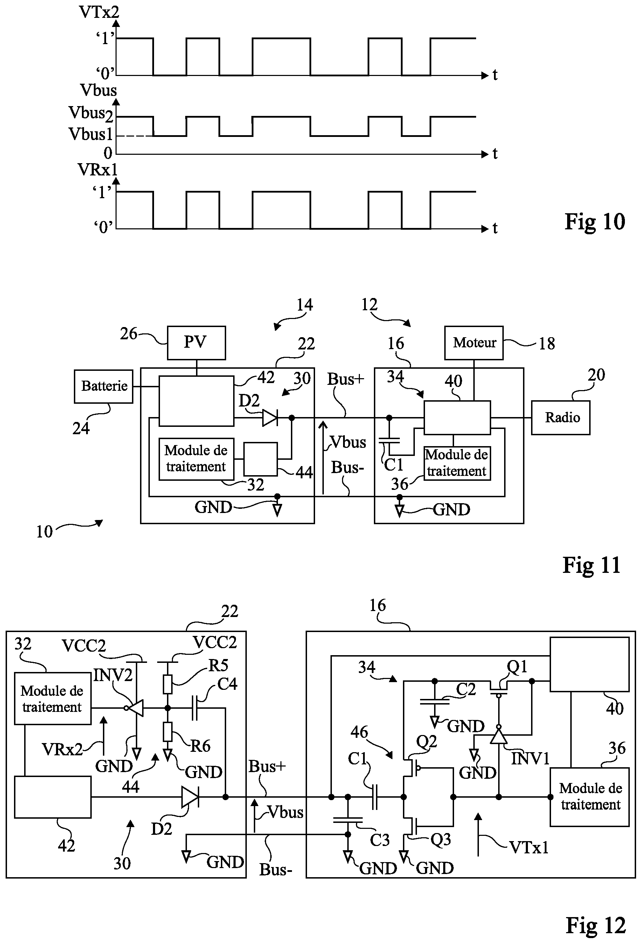

La figure 10 est un chronogramme du signal numérique VTx2 fourni par le module de traitement 32 du circuit électronique 22, de la tension Vbus et du signal numérique VRx1 fourni au module de traitement 36 du circuit électronique 12. La figure 10 illustre la transmission de données du circuit électronique 22 vers le circuit électronique 16.

Selon un mode de réalisation, la transmission de données du circuit électronique 16 vers le circuit électronique 22 est réalisée par une modulation du courant circulant sur les fils Bus+ et/ou Bus-.

Selon un autre mode de réalisation, la transmission de données du circuit électronique 16 vers le circuit électronique 22 est réalisée par une modulation de la tension Vbus entre les fils Bus+ et Bus-.

La figure 11 représente un mode de réalisation du système électromécanique 10 dans lequel des éléments participant à la transmission de données du circuit électronique 16 vers le circuit électronique 22 par une modulation de la tension Vbus sont représentés plus en détails.

Le module d'interface 34 du circuit électronique 16 comprend un condensateur C1 dont une électrode est reliée au fil Bus+ et l'autre électrode est reliée à une autre partie 40 du module d'interface 34 qui est, par ailleurs, connectée directement au fils Bus+. Le module d'interface 30 du circuit électronique 22 comprend une diode D2 dont la cathode est connectée au fil Bus+ et l'anode est connectée à une autre partie 42 du module d'interface 30. Le module d'interface 30 comprend, en outre, un circuit d'adaptation de niveau de tension 44 reliant le module de traitement 32 au fil Bus+ permettant de transformer le niveau de tension sur le fil Bus+ en un niveau adapté au module de traitement 32. Dans le cas où le module de traitement 32 comprend un microcontrôleur, le circuit d'adaptation 44 peut être connecté au port série du microcontrôleur.

Le module de traitement 36 est adapté à commander la connexion du condensateur C1, préchargé sous Vbus, en série avec la tension VCC1 de manière à augmenter temporairement la tension Vbus, la borne positive du condensateur C1 étant connectée au fil Bus+. La capacité du condensateur C1 peut être inférieure à 100 µF. Le module de traitement 36 est adapté à commander la charge du condensateur C1 avec la tension Vbus, c'est-à-dire à partir de l'énergie fournie par le circuit électronique 22. La mise en série du condensateur C1 avec la tension VCC1 permet d'augmenter temporairement la tension Vbus en restituant l'énergie préalablement emmagasinée dans le condensateur C1. Selon un mode de réalisation, une transmission de données du circuit électronique 16 vers le circuit électronique 22 ne peut être réalisée que lorsque la tension Vbus est initialement à la valeur Vbus₁. Bien entendu, le principe peut fonctionner aussi pour des valeurs de Vbus différentes : de Vbus₁ à Vbus_{N}. Dans le cas où la tension Vbus est initialement à la valeur Vbus₁, la mise en série du condensateur C1 avec la tension d'alimentation VCC1 permet d'augmenter temporairement la tension Vbus à la tension Vbus1+VCC1. Le condensateur C1 peut être mis en série avec la tension VCC1 lorsque le signal binaire à transmettre est "1" et la tension Vbus peut être laissée à la valeur Vbus₁ lorsque le signal binaire à transmettre est "0". La diode D2 permet au circuit électronique 16 d'augmenter temporairement la tension Vbus bien que les accumulateurs de la batterie 24 imposent une valeur minimale à Vbus (typiquement 3V). La diode D2 a une tension de seuil faible pour limiter la chute de tension sur le fil Bus+. A titre d'exemple, la diode D2 est une diode Schottky.

Ainsi, de manière avantageuse, lorsque le circuit électronique 16 transmet des données au circuit électronique 22, la tension sur le bus reste supérieure à la tension d'alimentation Vbus du dispositif électromécanique 12.

La figure 12 représente un mode de réalisation plus détaillé du système électromécanique 10 représenté en figure 11.

Dans le présent mode de réalisation, le module d'interface 34 comprend un circuit de commutation 46 adapté à connecter le condensateur C1 en série avec un condensateur C2 pré-chargé à la tension d'alimentation VCC1, ou en parallèle entre les fils Bus+ et Bus-. Selon un mode de réalisation, dans le cas où le module de traitement 36 comprend un microcontrôleur, le circuit de commutation 46 peut être commandé par le signal binaire VTx1 fourni à la sortie du port série du microcontrôleur. A titre d'exemple, le signal binaire "0" correspond à la tension VTx1 à 0 V et le signal binaire "1" correspond à la tension VTx1 à VCC1, qui peut être inférieure ou égale à Vbus₁. Par défaut, le signal binaire VTx1 peut être à "1".

Le circuit de commutation 46 comprend trois interrupteurs Q1, Q2 et Q3. Les interrupteurs Q1 et Q2 sont, par exemple, des transistors MOS à canal P. L'interrupteur Q3 est, par exemple, un transistor MOS à canal N. La source du transistor Q1 est reliée à une autre partie 40 du module d'interface 34 et est maintenue à VCC1. Le drain du transistor Q1 est relié à la source du transistor Q2. Le drain du transistor Q2 est relié au drain du transistor Q3 et la source du transistor Q3 est reliée à la masse GND. Le condensateur C1 a une première électrode reliée au drain du transistor Q2 et au drain du transistor Q3 et a une deuxième électrode reliée au fil Bus+. La grille du transistor Q1 est commandée par le signal fourni par un inverseur INV1 recevant en entrée un signal binaire VTx1 fourni par le module de traitement 42. Dans le cas où le module de traitement 36 comprend un microcontrôleur, l'inverseur INV1 peut recevoir en entrée le signal binaire VTx1 fourni par le port série du microcontrôleur. L'inverseur INV1 permet, de façon avantageuse, de rendre le signal VTx1 compatible avec un circuit périphérique du type UART actif à l'état bas, un "1" logique étant alors codé par un signal "0".

Le circuit de commutation 46 comprend, en outre, un condensateur C2 dont une électrode est reliée au drain du transistor Q1 et dont l'autre électrode est reliée à la masse GND. Les grilles des transistors Q2 et Q3 reçoivent le signal VTx1.

On a représenté en figure 12 par un condensateur C3, monté en parallèle entre les fils Bus+ et Bus-, la capacité d'entrée équivalente du circuit électronique 16, qui comprend notamment la capacité de filtrage en entrée du régulateur générant la tension d'alimentation VCC1 à partir du Vbus. La capacité du condensateur C1 est de préférence supérieure à la capacité d'entrée équivalente C3, par exemple d'un facteur 10, afin que le condensateur C3 n'absorbe pas trop de charges du condensateur C1 lorsque le condensateur C1 est placé en série avec le condensateur C2 pré-chargé à la tension d'alimentation VCC1.

Selon un mode de réalisation, le circuit d'adaptation 44 du module d'interface 30 du circuit électronique 22 comprend un condensateur C4 qui relie le fil Bus+ à l'entrée d'un inverseur INV2 dont la sortie est reliée au module de traitement 32. L'inverseur INV2 peut être alimenté par une tension d'alimentation VCC2 fournie par le module d'interface 30 et qui peut être inférieure ou égale à Vbus₁. L'entrée de l'inverseur INV2 est, en outre, reliée à la ligne recevant la tension d'alimentation VCC2 par l'intermédiaire d'une résistance R5 et à la masse GND par l'intermédiaire d'une résistance R6. Le condensateur C4 permet de ne récupérer que la composante alternative du signal de communication. L'inverseur INV2 permet, de façon avantageuse, de rendre le signal Rx2 compatible avec un circuit périphérique du type UART actif à l'état bas, un "1" logique étant alors codé par un signal "0".

Selon un mode de réalisation, l'état du circuit électronique 16 est identique lorsqu'il n'y a pas de transmission de données du circuit électronique 16 vers le circuit électronique 22 ou qu'il y a transmission du signal binaire "1" du circuit électronique 16 vers le circuit électronique 22.

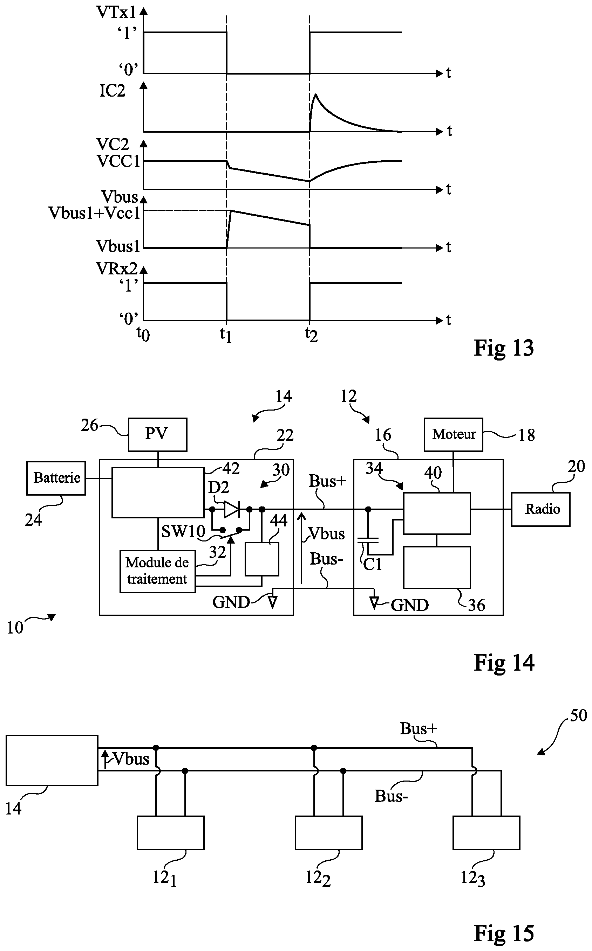

La figure 13 représente un exemple de chronogramme des signaux binaires VTx1, VRx2, de la tension Vbus, de la tension VC2 aux bornes du condensateur C2 et du courant IC2 alimentant le condensateur C2. On appelle t0, t1 et t2 des instants successifs. Dans le présent exemple, on suppose que le circuit électronique 16 est au repos jusqu'à l'instant t₁, que le signal binaire "0" est transmis entre les instants t₂ et t₃, et que le signal binaire "1" est transmis à l'instant t₃.

Entre les instants t₀ et t₁, le signal VTx1 est à "1". L'interrupteur Q3 est fermé et l'interrupteur Q2 est ouvert. La tension Vbus est à la valeur Vbus₁. Le condensateur C1 est chargé sous la tension Vbus. En outre, l'interrupteur Q1 est fermé. Le condensateur C2 est alors chargé sous la tension VCC1 fournie par le module d'interface 34 partir de la tension Vbus. La tension VC2 est à VCC1 et le courant IC2 est nul.

A l'instant t₁, le signal binaire VTx1 passe à "0". Le condensateur C2 est isolé du reste 40 du module d'interface 34 par l'ouverture de l'interrupteur Q1 et le condensateur C1 est mis en série entre le condensateur C2 et le fil Bus+ par la fermeture de l'interrupteur Q2, l'interrupteur Q3 étant ouvert. La tension Vbus passe alors de Vbus₁ à environ Vbus₁ + VCC1. La tension Vbus peut ensuite décroître lentement tant que dure l'émission du signal binaire "0", l'énergie consommée sur les fils Bus+ et Bus- étant alors en partie prélevée des condensateurs C1 et C2.

A l'instant t₂, le signal binaire VTx1 passe à "1". L'interrupteur Q3 est fermé et l'interrupteur Q2 est ouvert. La tension Vbus passe au niveau Vbus₁. Le condensateur C1 est chargé sous la tension Vbus. En outre, l'interrupteur Q1 est fermé. Le condensateur C2 est alors rechargé sous la tension VCC1 fournie par le module d'interface 40 à partir de la tension Vbus. La tension VC2 augmente donc jusqu'à VCC1 et le courant IC2 augmente temporairement puis s'annule lors de la fin de la recharge du condensateur C2.

De façon avantageuse, des signaux binaires sont échangés entre le circuit électronique 16 et le circuit électronique 22 alors que les courants circulant sur les fils Bus+ et Bus- restent faibles, de façon typique inférieurs à 10 mA. Les débits de transmission de données dans les deux directions peuvent atteindre plusieurs kilobits/seconde.

De manière avantageuse, des signaux binaires peuvent être échangés entre le circuit électronique 16 et le circuit électronique 22 alors que la tension disponible entre les fils Bus⁺ et Bus⁻ reste supérieure ou égale à une tension Vbusᵢ, par exemple la valeur de tension Vbus la plus faible, Vbus₁, permettant une alimentation correcte d'éléments qui composent le dispositif électromécanique 12, notamment le module radio 20, le module de traitement 36 et le module d'interface 34.

La figure 14 représente une variante du mode de réalisation du système électromécanique 10 représenté en figure 11 dans laquelle le circuit électronique 22 comprend, en outre, un interrupteur SW10 monté en parallèle aux bornes de la diode D2 et commandé par le module de traitement 32. L'interrupteur SW10 peut correspondre à un transistor MOS dont les bornes de puissance sont connectées à l'anode et à la cathode de la diode D2 et dont la grille est commandée par le module de traitement 32. Selon un mode de réalisation, l'interrupteur SW10 est maintenu ouvert lorsque le circuit électronique 16 transmet des données au circuit électronique 22 et est fermé dans les autres cas, notamment dans le cas où le moteur 18 est en fonctionnement et dans le cas où des données sont transmises du circuit électronique 22 vers le circuit électronique 16. Lorsque l'interrupteur SW10 est fermé, la diode D2 est court-circuitée. Ceci permet de supprimer la chute de tension aux bornes de la diode D2. De plus, ceci permet d'augmenter le débit des données transmises du circuit électronique 22 vers le circuit électronique 16. En effet, dans le cas où la diode D2 est court-circuitée, le passage de la tension Vbus de la valeur VCC1+Vbus₁ à Vbus₁, lors de la transition du signal binaire "0" au signal binaire "1", est imposé par la batterie 24 alors que, en présence de la diode D2, cette transition ne peut se faire qu'avec la circulation d'un courant dans le circuit électronique 16 pour décharger les capacités C1 et C3. Le courant consommé par le circuit électronique 16 est par nature faible (typiquement inférieur à 10 mA en dehors du fonctionnement du moteur 18) et conduit à une transition plus lente.

Le courant circulant sur les fils Bus+ et Bus- peut être amené à augmenter temporairement notamment lorsque le moteur 18 est en fonctionnement, la tension Vbus étant à la valeur de tension constante maximale Vbus_{N}. En l'absence de l'interrupteur SW10, ce courant doit être inférieur au courant maximum accepté par la diode D2. Par ailleurs, la chute de tension dans la diode D2 peut être préjudiciable au bon fonctionnement du moteur 18 et entraine des pertes électriques significatives. Dans la présente variante, la diode D2 est court-circuitée lorsque le moteur 18 est en fonctionnement de sorte que le courant circulant sur les fils Bus+ et Bus- peut être supérieur au courant maximum autorisé par la diode D2. Selon une autre variante, l'interrupteur SW10 n'est pas présent et la diode D2 est remplacée par plusieurs diodes montées en parallèle de façon à réduire le courant traversant chaque diode.

La figure 15 représente un autre mode de réalisation d'un système électromécanique 50 comprenant un seul dispositif électromécanique 14 et M dispositifs électromécaniques 12ᵢ, où M est un nombre entier supérieur ou égal à 2 et i est un nombre entier variant de 1 à M. Trois dispositifs électromécaniques 12₁, 12₂ et 12₃ sont représentés à titre d'exemple en figure 15. Chaque dispositif électromécanique 12ᵢ peut avoir la structure du dispositif électromécanique 12 décrit précédemment. Dans le présent mode de réalisation, chaque dispositif électromécanique 12ᵢ est relié aux fils Bus+ et Bus-. Le dispositif électromécanique 14 alimente chaque dispositif électromécanique 12ᵢ avec la tension Vbus. De plus, le dispositif électromécanique 14 est adapté à transmettre des données à chaque dispositif électromécanique 12ᵢ. Chaque dispositif électromécanique 12ᵢ est, en outre, adapté à transmettre des données au dispositif électromécanique 14 ou à un autre dispositif électromécanique 12ⱼ, avec j variant de 1 à M et différent de i. De préférence, chaque message transmis comprend un identifiant de l'émetteur et un identifiant du destinataire.

Dans le présent mode de réalisation, la transmission de données par chaque dispositif électromécanique 12ᵢ est réalisée par modulation de la tension Vbus. Ceci permet, de façon avantageuse, que chaque dispositif électromécanique 12ᵢ puisse démoduler de la même façon les données transmises par le dispositif électromécanique 14 ou un autre dispositif électromécanique 12ⱼ.

Des modes de réalisation particuliers ont été décrits. Diverses variantes et modifications apparaîtront à l'homme de l'art. En particulier, des modes de réalisation ont été décrits dans lesquels les modules de traitements 32 et 36 comprennent chacun un microcontrôleur et dans lequel les fils Bus+ et Bus-sont reliés, éventuellement par l'intermédiaire d'un circuit d'adaptation de tension, aux ports série de ces microcontrôleurs. A titre de variante, le module de traitement 32, 36 peut comprendre un circuit d'émission/réception de données en série interposé entre le microcontrôleur et les fils Bus+ et Bus- et adapté à échanger des données sur les fils Bus+ et Bus- selon un protocole de transmission de données en série et à échanger des données avec le microcontrôleur selon un protocole compris par le microcontrôleur. Ce circuit d'émission/réception de données peut comprend un contrôleur OneWire, un contrôleur I2C, etc.

## Revendications

1. Système électromécanique (10 ; 50) comprenant au moins des premier et deuxième dispositifs électromécaniques (12, 14) et au moins des premier et deuxième fils (Bus+, Bus-) reliant les premier et deuxième dispositifs électromécaniques, le deuxième dispositif électromécanique (14) comprenant une batterie d'accumulateurs (24) et un circuit électronique (22) reliant la batterie d'accumulateurs aux premier et deuxième fils, le circuit électronique comprenant des interrupteurs (SW1) reliant les accumulateurs entre eux et aux premier et deuxième fils, le circuit électronique étant adapté à fournir entre les premier et deuxième fils une tension (Vbus) d'alimentation du premier dispositif électromécanique (12) à une valeur de tension constante parmi au moins des première et deuxième valeurs de tension constante par l'ouverture et la fermeture des interrupteurs, la deuxième valeur étant plus élevée que la première valeur, et étant adapté à transmettre des premières données numériques au premier dispositif électromécanique par modulation de ladite tension d'alimentation entre lesdites au moins première et deuxième valeurs de tension constante, la première valeur de tension constante étant adaptée à l'alimentation électrique d'éléments qui composent le premier dispositif électromécanique, le premier dispositif électromécanique étant, en outre, adapté à transmettre des deuxièmes données numériques au deuxième dispositif électromécanique par lesdits au moins premier et deuxième fils.

2. Système électromécanique selon la revendication 1, dans lequel le premier dispositif électromécanique (12) est adapté à transmettre les deuxièmes données numériques au deuxième dispositif électromécanique (14) par modulation de ladite tension d'alimentation (Vbus).

3. Système électromécanique selon la revendication 2, dans lequel le premier dispositif électromécanique (12) comprend au moins des premier et deuxième condensateurs (C1, C2) et un circuit de commutation (Q1, Q2, Q3) adapté à connecter le premier condensateur en série avec le deuxième condensateur entre les premier et deuxième fils (Bus+, Bus-) ou à connecter le premier condensateur entre les premier et deuxième fils (Bus+, Bus-).

4. Système électromécanique selon la revendication 3, dans lequel le premier condensateur (C1) comprend des première et deuxième électrodes, la première électrode étant connectée au premier fil dans lequel le deuxième condensateur (C2) comprend des troisième et quatrième électrodes, la troisième électrode étant connectée au deuxième fil, et dans lequel le circuit de commutation est adapté à connecter la deuxième électrode du premier condensateur à la quatrième électrode du deuxième condensateur, ou à connecter la deuxième électrode du premier condensateur au deuxième fil, et la quatrième électrode du deuxième condensateur à un potentiel d'alimentation d'éléments du premier dispositif électromécanique.

5. Système électromécanique selon l'une quelconque des revendications 1 à 4, dans lequel le deuxième dispositif électromécanique (14) comprend une diode (D2) dont la cathode est reliée au premier fil (Bus+).

6. Système électromécanique selon l'une quelconque des revendications 1 à 5, dans lequel le deuxième dispositif électromécanique (14) comprend un générateur d'électricité (26) à partir d'une énergie d'origine renouvelable relié à la batterie d'accumulateurs (24).

7. Système électromécanique selon l'une quelconque des revendications 1 à 6, dans lequel le premier dispositif électromécanique (12) comprend un moteur électrique (18) alimenté par ladite tension d'alimentation (Vbus).

8. Système électromécanique selon la revendication 7, dans lequel le circuit électronique (22) est adapté à fournir ladite tension (Vbus) d'alimentation à une valeur de tension constante parmi au moins des première, deuxième et troisième valeurs de tension constante strictement croissantes, dans lequel le circuit électronique est adapté à fournir ladite tension d'alimentation à la troisième valeur lorsque le moteur (18) est en fonctionnement et dans lequel le circuit électronique est adapté à transmettre les premières données numériques au premier dispositif électromécanique (12) par modulation de ladite tension d'alimentation entre la première valeur et la deuxième valeur.

9. Système électromécanique selon l'une quelconque des revendications 1 à 8, dans lequel le premier dispositif (12) est relié au deuxième dispositif (14) seulement par les premier et deuxième fils (Bus+, Bus-).

10. Système électromécanique selon l'une quelconque des revendications 1 à 9, comprenant au moins deux premiers dispositifs (12₁, 12₂, 12₃) reliés auxdits au moins premier et deuxième fils (Bus+, Bus-).

11. Système électromécanique selon l'une quelconque des revendications 1 à 10, dans lequel lesdites au moins première et deuxième valeurs de tension constante sont positives.

12. Système électromécanique selon l'une quelconque des revendications 1 à 11, dans lequel le circuit électronique est adapté à fournir un premier potentiel positif au premier fil, et un deuxième potentiel, supérieur au premier potentiel, au deuxième fil du bus.

13. Procédé de communication d'un système électromécanique (10 ; 50) comprenant au moins des premier et deuxième dispositifs électromécaniques (12, 14) et au moins des premier et deuxième fils (Bus+, Bus-) reliant les premier et deuxième dispositifs électromécaniques, le deuxième dispositif électromécanique (14) comprenant une batterie d'accumulateurs (24) et un circuit électronique (22) reliant la batterie d'accumulateurs aux premier et deuxième fils, le circuit électronique (22) comprenant des interrupteurs (SW1) reliant les accumulateurs entre eux et aux premier et deuxième fils, dans lequel le circuit électronique fournit entre les premier et deuxième fils une tension (Vbus) d'alimentation du premier dispositif électromécanique (12) à une valeur de tension constante parmi au moins des première et deuxième valeurs de tension constante par l'ouverture et la fermeture des interrupteurs, la deuxième valeur étant plus élevée que la première valeur, et transmet des premières données numériques au premier dispositif électromécanique par modulation de ladite tension d'alimentation entre lesdites au moins première et deuxième valeurs de tension constante, la première valeur de tension constante étant adaptée à l'alimentation électrique d'éléments qui composent le premier dispositif électromécanique, et dans lequel le premier dispositif électromécanique transmet des deuxièmes données numériques au deuxième dispositif électromécanique par lesdits au moins premier et deuxième fils.

14. Procédé selon la revendication 13, dans lequel le premier dispositif électromécanique (12) transmet les deuxièmes données numériques au deuxième dispositif électromécanique (14) par modulation de ladite tension d'alimentation (Vbus).

15. Procédé selon la revendication 13 ou 14, dans lequel le système électromécanique comprend au moins deux premiers dispositifs (12₁, 12₂) reliés auxdits au moins premier et deuxième fils (Bus+, Bus-) et dans lequel les deux premiers dispositifs sont adaptés à échanger des troisièmes données numériques entre eux par l'intermédiaire des premier et deuxième fils.

## Patentansprüche

1. Elektromechanisches System (10; 50)), das Folgendes aufweist mindestens eine erste und eine zweite elektromechanische Vorrichtung (12, 14) und mindestens einen ersten und einen zweiten Draht (Bus +, Bus-), die die erste und die zweite elektromechanische Vorrichtung koppeln, wobei die zweite elektromechanische Vorrichtung (14) eine Akkumulatorenbatterie (24) und eine elektronische Schaltung (22), die die Akkumulatorenbatterie mit dem ersten und dem zweiten Draht verbindet, umfasst, wobei die elektronische Schaltung Schalter (SW1), die die Akkumulatoren miteinander und mit dem ersten und dem zweiten Draht verbinden, umfasst, wobei die elektronische Schaltung, zwischen dem ersten und dem zweiten Draht eine Versorgungsspannung (Vbus) der ersten elektromechanischen Vorrichtung (12) mit einem konstanten Spannungswert zwischen mindestens einem ersten und einem zweiten konstanten Spannungswert durch das Ausschalten und das Einschalten der Schalter zu versorgen in der Lage ist, wobei der zweite Wert höher als der erste Wert ist, und erste digitale Daten an die erste elektromechanische Vorrichtung durch Modulation der Versorgungsspannung zwischen dem mindestens ersten und dem zweiten konstanten Spannungswert zu übertragen in der Lage ist, wobei der erste konstante Spannungswert zur Versorgung Elemente, die die erste elektromechanische Vorrichtung bilden, in der Lage ist, und wobei die erste elektromechanische Vorrichtung zweite digitale Daten an die zweite elektromechanische Vorrichtung über den mindestens ersten und den zweiten Draht zu übertragen in der Lage ist.

2. Elektromechanisches System nach Anspruch 1, wobei die erste elektromechanische Vorrichtung (12) die zweiten digitalen Daten durch Modulation der Versorgungsspannung (Vbus) an die zweite elektromechanische Vorrichtung (14) übertragen kann.

3. Elektromechanisches System nach Anspruch 2, wobei die erste elektromechanische Vorrichtung (12) mindestens einen ersten und einen zweiten Kondensator (C1, C2) und einen Schaltkreis (Q1, Q2, Q3), der den ersten Kondensator mit dem zweiten Kondensator in Reihe zwischen dem ersten und dem zweiten Draht (Bus +, Bus-) oder den ersten Kondensator zwischen dem ersten und dem zweiten Draht (Bus +, Bus-) schalten kann, aufweist.

4. Elektromechanisches System nach Anspruch 3, wobei der erste Kondensator (C1) eine erste und eine zweite Elektrode umfasst, wobei die erste Elektrode mit dem ersten Draht verbunden ist, wobei der zweite Kondensator (C2) eine dritte und eine vierte Elektrode umfasst, wobei die dritte Elektrode mit dem zweiten Draht verbunden ist, und wobei der Schaltkreis die zweite Elektrode des ersten Kondensators mit der vierten Elektrode des zweiten Kondensators verbinden kann, oder die zweite Elektrode des ersten Kondensators mit dem zweiten Draht und die vierte Elektrode des zweiten Kondensators Kondensator mit einem Potential zum Versorgen von Elementen der ersten elektromechanischen Vorrichtung verbinden kann.

5. Elektromechanisches System nach einem der Ansprüche 1 bis 4, wobei die zweite elektromechanische Vorrichtung (14) eine Diode (D2), deren Kathode mit dem ersten Draht (Bus +) gekoppelt ist, aufweist.

6. Elektromechanisches System nach einem der Ansprüche 1 bis 5, wobei die zweite elektromechanische Vorrichtung (14) einen Generator für elektrischen Strom (26) aus erneuerbarer Energie, der mit der Akkumulatorenbatterie (24) gekoppelt ist, umfasst.

7. Elektromechanisches System nach einem der Ansprüche 1 bis 6, wobei die erste elektromechanische Vorrichtung (12) einen Elektromotor (18), der mit der Versorgungsspannung (Vbus) versorgt wird, umfasst.

8. Elektromechanisches System nach Anspruch 7, wobei die elektronische Schaltung (22), die Versorgungsspannung (Vbus) bei einem konstanten Spannungswert zwischen mindestens einem ersten, zweiten und dritten ansteigenden konstanten Spannungswert zu versorgen in der Lage ist, wobei die elektronische Schaltung zum versorgen der Versorgungsspannung mit dem dritten Wert, wenn der Motor (18) in Betrieb ist, in der Lage ist, und wobei die elektronische Schaltung die ersten digitalen Daten an die erste elektromechanische Vorrichtung (12) durch Modulation der Versorgungsspannung zwischen der ersten Wert und der zweite Wert zu übertragen in der Lage ist.

9. Elektromechanisches System nach einem der Ansprüche 1 bis 8, wobei die erste Vorrichtung (12) nur durch die ersten und zweiten Drähte (Bus +, Bus-) mit der zweiten Vorrichtung (14) gekoppelt ist.

10. Elektromechanisches System nach einem der Ansprüche 1 bis 9, umfassend mindestens zwei erste Vorrichtungen (121, 122, 123), die mit dem mindestens ersten und dem zweiten Draht (Bus +, Bus-) verbunden sind.

11. Elektromechanisches System nach einem der Ansprüche 1 bis 10, wobei der mindestens erste und der zweite konstante Spannungswert positiv sind.

12. Elektromechanisches System nach einem der Ansprüche 1 bis 11, wobei die elektronische Schaltung, ein erstes positives Potential an den ersten Draht und ein zweites Potential, das größer als das erste Potential ist, an den zweiten Draht des Busses zu versorgen in der Lage ist.

13. Verfahren zur Kommunikation eines elektromechanischen Systems (10; 50), der mindestens einer ersten und einer zweiten elektromechanischen Vorrichtung (12, 14) und mindestens einen ersten und einen zweiten Draht (Bus +, Bus-), die die erste und die zweite elektromechanische Vorrichtung koppeln, aufweist, wobei die zweite elektromechanische Vorrichtung (14) eine Akkumulatorenbatterie (24) und eine elektronische Schaltung (22), die die Akkumulatorenbatterie mit dem ersten und dem zweiten Draht verbindet, umfasst, wobei die elektronische Schaltung Schalter (SW1), die die Akkumulatoren miteinander und mit dem ersten und dem zweiten Draht verbinden, umfasst, wobei die elektronische Schaltung zwischen dem ersten und dem zweiten Draht eine Versorgungsspannung (Vbus) der ersten elektromechanischen Vorrichtung (12) mit einem konstanten Spannungswert zwischen mindestens einem ersten und einem zweiten konstanten Spannungswert durch das Ausschalten und das Einschalten der Schalter versorgt, wobei der zweite Wert höher als der erste Wert ist, und erste digitale Daten an die erste elektromechanische Vorrichtung durch Modulation der Versorgungsspannung zwischen dem mindestens ersten und dem zweiten konstanten Spannungswert überträgt, wober der erste konstante Spannungswert zur Versorgung Elemente, die die erste elektromechanische Vorrichtung bilden, in der Lage ist, und wobei die erste elektromechanische Vorrichtung zweite digitale Daten an die zweite elektromechanische Vorrichtung über den mindestens ersten und den zweiten Draht überträgt.

14. Verfahren nach Anspruch 13, wobei die erste elektromechanische Vorrichtung (12) die zweiten digitalen Daten durch Modulation der Versorgungsspannung (Vbus) an die zweite elektromechanische Vorrichtung (14) überträgt.

15. Verfahren nach Anspruch 13 oder 14, wobei das elektromechanische System mindestens zwei erste Vorrichtungen (121, 122), die mit dem mindestens ersten und dem zweiten Draht (Bus +, Bus-) verbunden sind, und wobei die ersten beiden Vorrichtungen, dritte digitale Daten zwischen ihnen aus dem ersten und dem zweiten Draht auszutauschen, in der Lage sind, umfasst.

## Claims

1. An electromechanical system (10; 50) comprising at least first and second electromechanical devices (12, 14) and at least first and second wires (Bus+, Bus-) coupling the first and second electromechanical devices, the second electromechanical device (14) comprising a battery of accumulators (24) and an electronic circuit (22) coupling the battery of accumulators to the first and second wires, the electronic circuit comprising switches (SW1) coupling the accumulators together and to the first and second wires, the electronic circuit being capable of delivering between the first and second wires a voltage (Vbus) for powering the first electromechanical device (12) at a constant voltage value among at least first and second constant voltage values by the turning off and the turning on of the switches, the second value being higher than the first value, and being capable of transmitting first digital data to the first electromechanical device by modulation of said power supply voltage between said at least first and second constant voltage values, the first constant voltage value being capable of powering elements which form the first electromechanical device, the first electromechanical device being further capable of transmitting second digital data to the second electromechanical device over said at least first and second wires.

2. The electromechanical system of claim 1, wherein the first electromechanical device (12) is capable of transmitting the second digital data to the second electromechanical device (14) by modulation of said power supply voltage (Vbus).

3. The electromechanical system of claim 2, wherein the first electromechanical device (12) comprises at least first and second capacitors (C1, C2) and a switching circuit (Q1, Q2, Q3) capable of series-connecting the first capacitor with the second capacitor between the first and second wires (Bus+, Bus-) or of connecting the first capacitor between the first and second wires (Bus+, Bus-).

4. The electromechanical system of claim 3, wherein the first capacitor (C1) comprises first and second electrodes, the first electrode being connected to the first wire, wherein the second capacitor (C2) comprises third and fourth electrodes, the third electrode being connected to the second wire, and wherein the switching circuit is capable of connecting the second electrode of the first capacitor to the fourth electrode of the second capacitor, or of connecting the second electrode of the first capacitor to the second wire, and the fourth electrode of the second capacitor to a potential for powering elements of the first electromechanical device.

5. The electromechanical system of any of claims 1 to 4, wherein the second electromechanical device (14) comprises a diode (D2) having its cathode coupled to the first wire (Bus+).

6. The electromechanical system of any of claims 1 to 5, wherein the second electromechanical device (14) comprises a generator of electric power (26) from power of renewable origin coupled to the battery of accumulators (24).

7. The electromechanical system of any of claims 1 to 6, wherein the first electromechanical device (12) comprises an electric motor (18) powered with said power supply voltage (Vbus) .

8. The electromechanical system of claim 7, wherein the electronic circuit (22) is capable of delivering said power supply voltage (Vbus) at a constant voltage value among at least first, second, and third increasing constant voltage values, wherein the electronic circuit is capable of delivering said power supply voltage at the third value when the motor (18) is in operation and wherein the electronic circuit is capable of transmitting the first digital data to the first electromechanical device (12) by modulation of said power supply voltage between the first value and the second value.

9. The electromechanical system of any of claims 1 to 8, wherein the first device (12) is coupled to the second device (14) only by the first and second wires (Bus+, Bus-).

10. The electromechanical system of any of claims 1 to 9, comprising at least two first devices (12₁, 12₂, 12₃) coupled to said at least first and second wires (Bus+, Bus-).

11. The electromechanical system of any of claims 1 to 10, wherein said at least first and second constant voltage values are positive.

12. The electromechanical system of any of claims 1 to 11, wherein the electronic circuit is capable of delivering a first positive potential to the first wire, and a second potential, greater than the first potential, to the second wire of the bus.

13. A method of switching an electromechanical system (10; 50) comprising at least first and second electromechanical devices (12, 14), and at least first and second wires (Bus+, Bus-) coupling the first and second electromechanical devices, the second electromechanical device (14) comprising a battery of accumulators (24) and an electronic circuit (22) coupling the battery of accumulators to the first and second wires, the electronic circuit (22) comprising switches (SW1) coupling the accumulators together and to the first and second wires, wherein the electronic circuit delivers between the first and second wires a voltage (Vbus) for powering the first electromechanical device (12) at a constant voltage value among at least first and second constant voltage values by the turning on and the turning off of the switches, the second value being higher than the first value, and transmits first digital data to the first electromechanical device by modulation of said power supply voltage between said at least first and second constant voltage values, the first constant voltage value being capable of powering elements which form the first electromechanical device, and wherein the first electromechanical device transmits second digital data to the second electromechanical device over said at least first and second wires.

14. The method of claim 13, wherein the first electromechanical device (12) transmits the second digital data to the second electromechanical device (14) by modulation of said power supply voltage (Vbus).

15. The method of claim 13 or 14, wherein the electromechanical system comprises at least two first devices (12₁, 12₂) coupled to said at least first and second wires (Bus+, Bus-) and wherein the first two devices are capable of exchanging third digital data together over the first and second wires.
